# EUROPEAN PATENT SPECIFICATION

(11) **EP 3 392 069 B1**
(45) Date of publication and mention of the grant of the patent: **18.12.2019**
(21) Application number: 18167808.7
(22) Date of filing: 17.04.2018
(51) Int. Cl.: B60H 1/26, B61D 27/00

(54) **VENTILATOR AND VEHICLE PROVIDED WITH A VENTILATOR**
LÜFTER UND MIT EINEM LÜFTER AUSGESTATTETES FAHRZEUG
VENTILATEUR ET VÉHICULE ÉQUIPÉ D'UN VENTILATEUR

(30) Priority: 20.04.2017 NL 2018756
(43) Date of publication of application: 24.10.2018
(73) Proprietor: Imbema-Holland B.V., 2011 VN Haarlem (NL)
(72) Inventor: VAN DER VEER, Gerrit Christiaan, 2651 ZA Berkel en Rodenrijs (NL)
(74) Representative: Patentwerk B.V.

(56) References cited:
- GB-A- 566 517
- GB-A- 629 583
- GB-A- 667 214
- GB-A- 1 092 640
- US-A- 2 550 353

## Description

The invention relates to a ventilator for installation on a vehicle. The invention also relates to a vehicle provided with a ventilator according to the invention.

It is generally known to replenish the air in a vehicle by means of a ventilation system in order to achieve an indoor climate which is desirable for people, animals, and/or cargo. Such a ventilation system is usually connected to the cabin or loading space of the vehicle and is capable of discharging excess heat, condensation, odours or other pollutants directly to the open air. Known ventilation systems may be of an active or passive design. In the former case, a(n often electrical) drive mechanism is used to make a ventilator work, by means of which fresh air is supplied to a space to be ventilated or air to be replenished is discharged from the space to be ventilated. It is also possible to allow the ventilator to rotate on account of the wind which is produced while the vehicle is driving, as a result of which a separate drive mechanism for the ventilator may be omitted. However, due to the rotating components, active ventilation systems are susceptible to wear and/or malfunction. In addition, such systems are unsuitable for use in automatic washes and such systems usually have a height which is such that the use of other elements on the roof, such as roof racks, is no longer possible.

Passive ventilation systems offer an alternative to the abovementioned active ventilation systems. With passive ventilation, the air flow which is responsible for replenishing the air in the space to be ventilated is not generated actively. The supply and discharge of air to and from the space to be ventilated is instead solely regulated by guiding an air flow which is usually brought about while the vehicle is driving. As passive ventilation systems are characterized by the absence of moving components, the problems mentioned earlier with regard to wear and malfunctions are largely remedied. However, one drawback of such a ventilator is the fact that there is insufficient ventilation at low speeds of the vehicle. Also, under some circumstances, for example at relatively high ambient temperatures, the ventilation appears not to be sufficient. In addition, such ventilators are becoming increasingly inadequate, as the insulation of the spaces to be ventilated is continuously being improved and, by nature, very little ventilation can take place, because the air supply in such well-insulated spaces is limited.

US2550353 discloses means for the ventilation of vehicles, with a continuous and controllable supply of fresh air and withdrawal of vitiated air such that air is being continuously changed and the pressure of the air in the vehicle does not vary appreciably. GB566517 discloses improvements in ventilators for vehicles which combines the functions of air extraction and air intake ventilators, which is of simple and compact construction and can be fitted at any convenient point on a vehicle body. GB667214 discloses ventilators in which admission and extraction of air is effected by means of a single composite ventilator fitting. The ventilator comprises a base and an attached cover, the base having inlet and outlet openings and the cover proves separate compartments. GB629583 discloses ventilators for vehicles with louvres, to inject air to the interior of a vehicle and extract air from the interior of the vehicles, combined with means to exclude rain, water or snow from ingress to the interior through the ventilator. GB1092640 discloses improvements in ventilators incorporating an opening leading into the interior of the vehicle and louvred openings at the front and rear for the passage of air when the vehicle is in motion.

It is therefore an object of the invention to improve the activity of existing ventilators for installation on vehicles or at least to provide an alternative for these ventilators.

To this end, the invention provides a ventilator for installation on a vehicle comprising: a covering which is attachable to the vehicle, which covering encloses a first air chamber and a second air chamber, a supply opening which is in contact with the first air chamber for supplying air from the first air chamber to a space of the vehicle to be ventilated, a discharge opening which is in contact with the second air chamber for discharging air to the second air chamber from the space to be ventilated, an air inlet connected to the first air chamber, arranged in a front side of the covering which is to be turned in a direction of travel of the vehicle, for supplying outside air to the first air chamber, and an air outlet connected to the second air chamber, arranged in a rear side of the covering which is to be turned away from the direction of travel of the vehicle, for discharging air from the second air chamber to the outside air, in which the covering is provided with at least one air passage which is connected to the second air chamber for passing an air flow from an outer side of the covering into the second air chamber via an inlet opening. According to the invention, the inlet opening of the at least one air passage faces the front side of the covering. By means of the ventilator according to the invention, an air flow which is generated by movement of the vehicle is passed into the space to be ventilated via the air inlet, the first air chamber and the supply opening. In addition, the air may leave the space to be ventilated again via the discharge opening, the second air chamber and the air outlet. The last-mentioned discharge of air from the space to be ventilated takes place, on the one hand, due to the overpressure which exists with respect to the pressure in the space to be ventilated at the location of the supply opening and the first air chamber caused by the inflow of air from the front side of the covering. On the other hand, air is pushed away by the front side of the ventilator during movement of the vehicle in the direction of travel, as a result of which an area of underpressure is produced at the rear side of the ventilator, also referred to as the wake. This local pressure, which is reduced compared to the pressure in the space to be ventilated, causes a suction effect, as a result of which air from the second air chamber flows to the outside via the air outlet. In order to increase the efficiency of the ventilator, the covering is provided with at least one air passage which is connected to the second air chamber and passes an air flow from the outside into the second air chamber. This air flow causes surrounding air from the second air chamber to be carried along in the air flow, as a result of which the pressure around the air flow is reduced locally and air is sucked into the second air chamber from the space to be ventilated via the discharge opening. By means of the air passage, it becomes possible to pass an air flow directly along the discharge opening, as a result of which the pressure drop and the resulting suction action is greatest at the discharge opening. This results in an improved discharge of air from the space to be ventilated, as a result of which the circulation of air in the space to be ventilated - and thus the ventilating action of the ventilator - is increased. In order to be able to pass the air flow directly along the discharge opening, the air passage is, in such a case, arranged in a part of the covering which is situated close to the discharge opening. In one such case, the covering is substantially closed, except for the abovementioned air inlet, air outlet and at least one air passage, as a result of which the air flowing through the ventilator is forced to follow a predetermined flow path. This benefits the efficiency of the ventilator. It is also conceivable for the ventilator to be provided with several discharge openings, supply openings, inlets and outlets. In addition, the covering may be designed in such a way that it encloses several first and second air chambers. In a common case, the ventilator is situated on the top side, or on the roof, of a vehicle comprising a space to be ventilated. However, it is also possible to arrange the ventilator on another side, such as a lateral side or a bottom side, of a vehicle. The covering may also consist of several parts, for example a first part for enclosing a first air chamber and a second part for enclosing a second air chamber. The covering may also be made in one piece.

The inlet opening of the at least one air passage is directed towards the front side of the covering. The air flowing along the covering from the front side to the rear side can consequently flow into the inlet opening directly and unimpeded, as a result of which the air flow is passed into the second air chamber at the greatest possible velocity. The difference in velocity between the air flow passed through the air passage and the air which flows into the second air chamber along the discharge opening is consequently also greater, which increases the interaction between the respective masses of air (due to the mutual friction resulting from the viscosity of the air). As a consequence thereof, the amount of air which surrounds the air flow and which is swept along increases, which increases the suction action of the air flow and improves the discharge of air from the space to be ventilated.

In order to further improve the efficiency of the ventilator, the at least one air passage may be configured for guiding the air flow which was passed into the second air chamber via the inlet opening to the air outlet through the second air chamber. Guiding the air flow in the direction of the air outlet is performed in such cases by turning an outlet opening of the air passage towards the air outlet. By guiding the air flow guided through the air passage directly in the direction of the air outlet, the air in the second air chamber and originating from the space to be ventilated is directly removed to the outside, together with the air flow. In this case, the air in the second air chamber will mainly follow a path to the air outlet which is as short as possible, which increases the circulation in the second air chamber and the circulation in the space to be ventilated. As an additional advantage, the air flow passed through the air passage results in a reduction in the air resistance which is caused by the wake which is present behind the covering. The air supplied by the air flow on the rear side of the covering will partly cancel the local underpressure which is produced on the rear side of the ventilator during driving. In other words, the wake on the rear side of the ventilator will become smaller, as a result of which the air resistance experienced by the vehicle reduces.

In a possible embodiment of the ventilator according to the invention, the ventilator comprises several air passages which are preferably arranged on either side of the covering. By providing the covering with several air passages, the number of air flows introduced into the second air chamber may increase, as a result of which the suction action which it creates will be enhanced. In an advantageous case, the air passages are arranged symmetrically in order to produce a symmetrical flow pattern in the second air chamber. This benefits an efficient discharge of air from the second air chamber. In another possible embodiment, at least two of the air passages are placed one behind the other in a direction from the front side to the rear side of the covering. As a result thereof, efficient use can be made of the space which is available on the covering for the air passages.

In a preferred embodiment of the ventilator according to the invention, the first air chamber extends under a front part of the covering which is to be turned in the direction of travel and the second air chamber extends under a rear part of the covering which is to be turned away from the direction of travel. By choosing the position of the air chambers in such a way that the air chambers extend behind each other, viewed in the direction of travel, the path of the air flowing from the air inlet to the air outlet through the ventilator can be made as short as possible. This improves the through-flow of air through the ventilator and the efficiency of the ventilator.

In yet another embodiment of the ventilator according to the invention, the covering narrows in the direction of the rear side, in which case the at least one air passage is arranged in a narrowing part of the covering. By positioning the air passage on a narrowing part of the covering, it becomes possible for the air passage to extend beyond the covering without the air passage falling outside the frontal surface of the ventilator, which is usually formed by the front side of the covering. As a result thereof, the drag coefficient of the ventilator can be reduced, which reduces the drag experienced by the vehicle while driving, and the air passage is less visible from the front, if at all. In addition, the narrowing in the direction of the rear side causes a local acceleration of the air flow on the rear side of the ventilator. This local acceleration results in more air accumulating at the rear, thus increasing the suction action on the discharge side.

In yet another embodiment of the ventilator according to the invention, the first air chamber and the second air chamber are essentially completely separate from one another. All air which flows into the first air chamber is thus forced to flow through the space to be ventilated before it reaches the second air chamber. In an advantageous case, the first air chamber and the second air chamber are separated from one another by means of a double-wall partition, the walls of which enclose a drainage duct and are each provided with at least one hole for discharging water from the first air chamber and the second air chamber, respectively, to the drainage duct. By means of the drainage system formed by this double-wall construction, (rain)water which has entered the first or the second air chamber, respectively, via the air inlet or the air outlet can be efficiently discharged via the hole and the drainage duct to an outer side of the ventilator. It is also advantageous if the walls of the double-wall partition are at least partly curved and a concave side thereof faces the first air chamber and the second air chamber, respectively. Water which enters the air chambers is passed along the walls on account of the wind and/or direction of travel due to the concave shape of the walls until the water encounters the holes provided in the walls, from where the water will flow into the drainage duct. In such an embodiment, the holes will be arranged on the respective walls at a point where the water converges on account of the wind/direction of travel and the shape of the walls. Usually, the at least one hole in each of the walls will to this end be arranged in the centre of the wall. However, it is also conceivable for the walls of the partition to assume a different shape in order to guide water to holes which are positioned differently in the walls. However, from the point of view of guiding the air flow to the supply opening and from the discharge opening, concave walls are preferred. The reason for this is that a concave shape has the effect that the air flow along the walls is deflected in the direction of the centre of the air chamber, where the supply opening or the discharge opening is usually present.

Likewise for the purpose of acting as a water barrier, the supply opening may be surrounded essentially completely by an upright edge. If the ventilator comprises several supply openings, each of the supply openings may be separately surrounded by an upright edge, but it is also possible for all supply openings together to be surrounded by a single upright edge. The expression an upright edge is to be understood to refer to any walls which project from the surface in which the supply opening is provided. Water which commonly moves through the (first) air chamber via the inside walls of the covering will be deflected by this upright edge, thus preventing water from entering the space to be ventilated via the supply opening. In another embodiment, the upright edge may screen off the supply opening essentially completely on a side facing the air inlet and at least partly expose it on a side facing away from the air inlet. Screening off the supply opening may be achieved, for example, by the fact that the upright edge extends essentially from the top side to the bottom side of the covering. Opening up the supply opening may be achieved, on the other hand, for example, by leaving a space between a (free) top end of the edge and an opposite part of the covering. An advantage of completely screening off the supply opening on a side facing away from the air inlet is the fact that water which moves through the air chamber in the direction of travel does not unexpectedly end up in the supply opening. However, by at least partly opening up the supply opening on a side facing away from the air inlet, the inflow of air to the supply opening is ensured.

In a similar way, the discharge opening may be essentially completely surrounded by an upright edge. This upright edge may off the discharge opening essentially completely on a side facing the air outlet and at least partly expose it on a side facing away from the air outlet. Although the inflow of water on the rear side is usually limited because the rear side usually faces away from the direction of travel, a water-retaining structure is necessary in case the direction of travel is turned around when the vehicle reverses.

The upright edge of the discharge opening and/or the supply opening may also extend in the direction of the loading space to be ventilated. In such a case, the upright edge will thus extend under the rest of the ventilator. The upright edge may thus be used to place the ventilator on or over openings in the space to be ventilated. The space to be ventilated is provided with a supply opening and a discharge opening, for example on the top side. The upright edges of the openings of the ventilator are, for example, of an identical or slightly smaller size and fit in these openings of the space to be ventilated. The upright edge thus acts as a coupling between the loading space and the ventilator, and connects the space to be ventilated to the open air.

In order to make the flow path of the air being passed through the ventilator as short as possible, it is advantageous if the supply opening and the discharge opening are configured to be directly connected to the space to be ventilated. In this case, the space to be ventilated is therefore directly connected to the supply opening and the discharge opening. In such a case, the supply opening and the discharge opening are arranged in a bottom side of the covering which is to be turned towards the vehicle. This makes a direct connection of the supply opening and the discharge opening to the space to be ventilated possible. However, it is also conceivable for the supply opening and/or the discharge opening to be arranged in a side wall of the covering which is not turned towards the vehicle. In such a case, the air from the supply opening and/or to the discharge opening may be passed from and/or into the space to be ventilated by means of additional air-guiding means, such as an air duct.

It is possible for the air inlet and/or the air outlet to be provided with an adjustable closing element so as to be able to at least partly close or open the air inlet and/or the air outlet. By means of such an adjustable closing element, it is possible to adjust the amount of air passed through the ventilator. This also determines the speed at which the air is replenished in the space to be ventilated. Also, it is possible to decide to close the air inlet and/or the air outlet in specific cases, such as when passing through of locally (heavily) polluted air, heavy showers and/or when the vehicle is parked. It is also possible for the air inlet and/or the air outlet to be provided with a screening element, such as a grille, in order to screen off the inlet/outlet so as to prevent dirt of a certain size upwards from entering the ventilator, where the dirt could cause damage to the ventilator. It is likewise possible to use such a screening element to prevent dirt from reaching the space to be ventilated.

The covering may be made of a plastic, and in particular a fibre-reinforced plastic. Plastic, and in particular fibre-reinforced plastic, is a material which is highly suitable for the production of a ventilator according to the invention, as this material is relatively lightweight with respect to other materials compared to its strength properties. Also, (fibre-reinforced) plastic can be processed to form a desired end product more easily and quickly compared to equivalent materials, such as metal, which results in cost savings during production. Finally, (fibre-reinforced) plastic has low maintenance requirements and a long service life.

The invention also relates to a vehicle provided with a ventilator according to the invention. The ventilator according to the invention is suitable for use with different types of vehicles. Thus, for example, vehicles used for transporting people, animals, goods or a combination thereof may all be provided with a ventilator according to the invention. In that case, the supply opening and the discharge opening of the ventilator are connected to a space to be ventilated, such as a loading space, of the vehicle. It is also possible for the ventilator to be connected to a cabin of the vehicle in which people and/or animals are being transported. In an advantageous case, the ventilator is placed on a roof of the vehicle, as a result of which the width of the vehicle remains the same after the ventilator has been installed. In this case, the bottom side of the covering of the ventilator usually faces the roof of the vehicle.

The invention will be explained by means of non-limiting exemplary embodiments which are represented in the following figures, in which:
- Fig. 1 shows a cut-away perspective view of a ventilator according to the invention;
- Fig. 2 shows a top view of the ventilator shown in Fig. 1;
- Fig. 3 shows a side view of the ventilator shown in Fig. 1; and
- Fig. 4 shows an exploded view of the ventilator according to the invention.

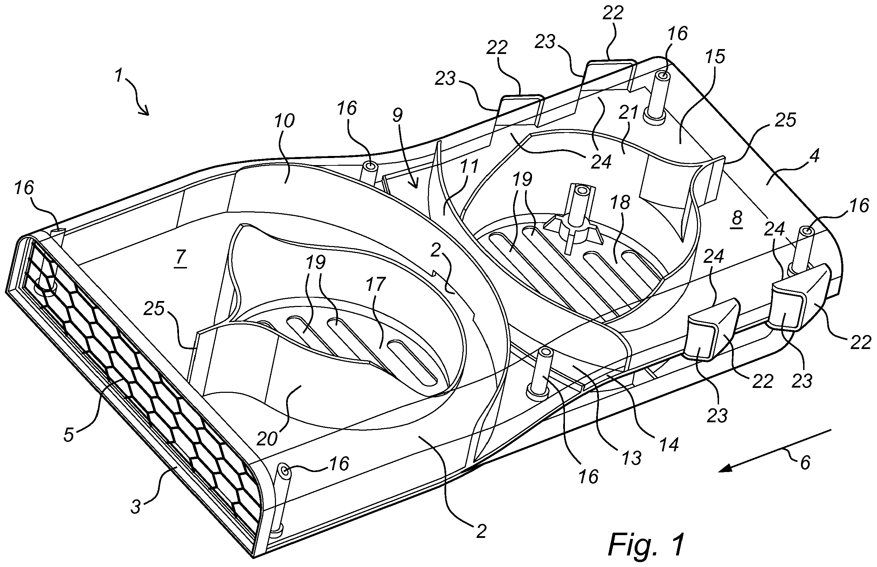

Fig. 1 shows a cut-away perspective view of a ventilator 1 according to the invention. The ventilator 1 comprises a covering 2 which is provided with an air inlet 3 on the front side and is provided with an air outlet 4 on the rear side. In the illustrated variant of the ventilator 1, the air inlet 3 is screened off by a screening element 5, in this case formed by a grille. The ventilator 1 is configured to be attached to a vehicle with the air inlet 3 facing in the direction of travel 6 and with the air outlet 4 facing away from the direction of travel 6. The covering 2 encloses a first air chamber 7 and a second air chamber 8, wherein the first air chamber 7 is situated under a front part of the covering 2 which is to be turned towards the direction of travel 6 and the second air chamber 8 is situated under a rear part of the covering 2 which is to be turned away from the direction of travel 6. In this case, the air inlet 3 and the air outlet 4 are connected to the first air chamber 7 and second air chamber 8. A partition 9 is placed between the air chambers 7, 8 which comprises two walls 10, 11. The walls 10,11 are curved and their concave side faces the air chambers 7, 8. In (the centre of) the walls 10, 11, holes 12 are arranged, as a result of which water can be passed to a drainage duct 13 situated behind the walls 10, 11. The drainage duct 13 ends at an outer side of the covering 2, for which purpose a hole 14 is also provided in the covering 2. On a bottom side, the air chambers 7, 8 are delimited by a bottom side 15 of the covering 2 to be turned towards the vehicle. However, it is also possible for the covering 2 to be partly open on the bottom side and for the space enclosed by the covering 2 to be at least partly delimited by the vehicle on the bottom side. The ventilator 1 is furthermore (optionally) provided with reinforcing elements 16 which provide additional sturdiness to the walls of the covering 2. The reinforcing elements 16 may also serve as attachment means in order to attach the ventilator 1 to the vehicle. When the ventilator 1 is installed on a vehicle, a supply opening 17 and a discharge opening 18 are provided in the bottom side 15 of the covering 2 by means of which the air chambers 7, 8 are in contact with the space to be ventilated of said vehicle. In the illustrated variant embodiment, the supply opening 17 and the discharge opening 18 are formed by a number of elongate holes 19 in the bottom side 15 of the covering 2. However, it is equally possible for the supply opening 17 and the discharge opening 18 to be formed by a single hole or several differently formed and/or oriented holes. Both the supply opening 17 and the discharge opening 18 are surrounded by an upright edge 20, 21. Due to the fact that the upright edge 20 around the supply opening 17, on a side facing the air inlet 3, and the upright edge 21 around the discharge opening 18, on a side facing the air outlet 4, extend across the full height of the covering 2, the supply opening 17 and the discharge opening 18 are screened off essentially completely on the side facing the air inlet 3 and the side facing the air outlet 4, respectively. On the other hand, the upright edges 20, 21 on an opposite side leave a space between the upright edge 20, 21 and the covering 2, as a result of which the supply opening 17 and the discharge opening 18 are exposed. The covering 2 narrows in the direction of the rear side. In the narrowed part of the covering 2, air passages 22 are arranged on opposite sides of the covering 2. In the illustrated exemplary embodiment, the air passages 22 are arranged symmetrically on the covering 2 and placed behind one another in pairs. However, other installation configurations of the air passages 22 are also conceivable. In the illustrated example, the air passages 22 assume the shape of fins projecting beyond the covering 2 and each comprise an inlet opening 23 which faces the front side of the covering 2. As a result thereof, the inlet openings 23 of the air passages 22 usually face in the direction of travel 6, as a result of which the inlet openings 23 are placed directly facing the wind. In addition, the air passages 22 are oriented in such a way that air is guided to the air outlet 4 via a rear side 24 of the air passages 22 projecting on the inlet opening 23 via the second air chamber 8.

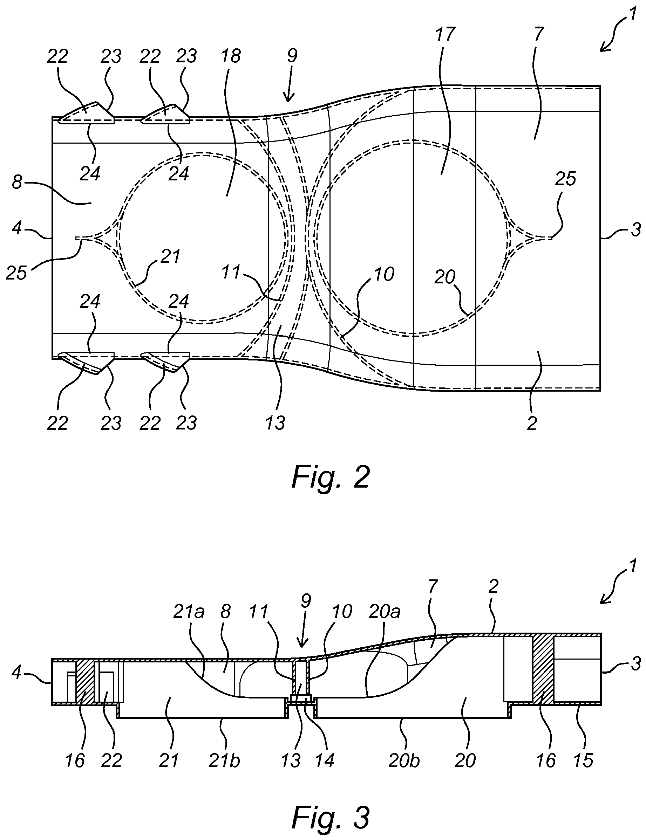

Fig. 2 shows a top view of the ventilator illustrated in Fig. 1, in which corresponding components are denoted by corresponding reference numerals. The top view shows in greater detail how the upright edges 20, 21 which surround the supply opening 17 and the discharge opening 18 run to a point 25 towards the air inlet 3 and the air outlet 4, respectively, on their side opposite the air inlet 3 and the air outlet 4. The resulting aerodynamic shape ensures an improved through-flow of air between the air inlet 3 and the supply opening 17 on one side and the air outlet 4 and the discharge opening 18 on the other side.

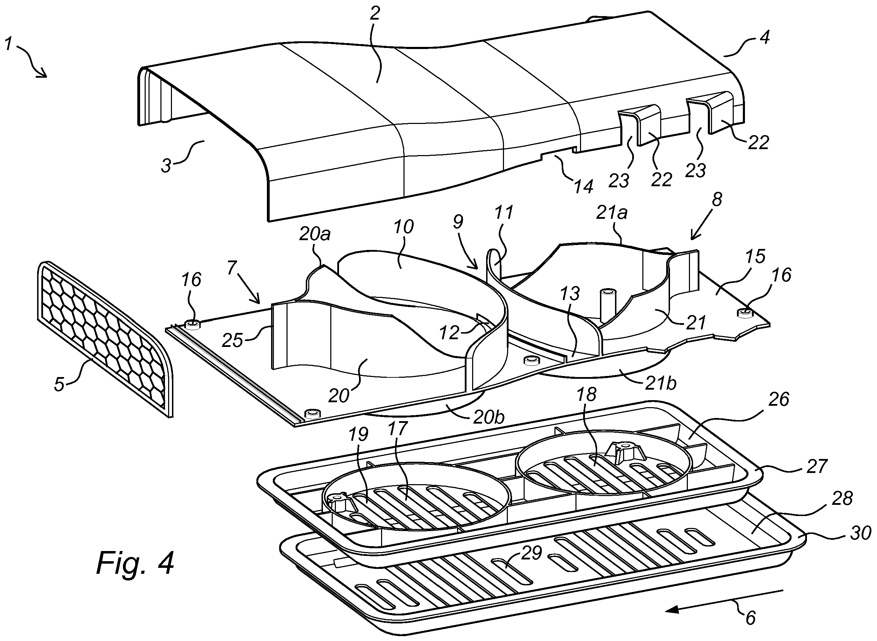

Fig. 3 shows a side view of the ventilator illustrated in Fig. 1, in which case corresponding components are again denoted by corresponding reference numerals. As can be seen in the side view, the height of the covering also decreases towards the rear side. In Fig. 3, the upright edges 20, 21 are divided into a top part 20a, 21 a and a bottom part 20b, 21b. The top parts 20a, 21a in this case fulfil the function mentioned above. In addition, the illustrated embodiment shows that the upright edges which surround the supply opening and the discharge opening extend beyond the bottom side of the covering. The bottom parts 20b, 21b thus serve to connect the ventilator 1 to the space to be ventilated (not shown) of the vehicle. The bottom parts 20b, 21b of the upright edges 20, 21, for example, have a diameter which is adapted to the diameter of openings (not shown) in the space to be ventilated. The resulting edges which project downward with respect to the bottom side of the covering usually fall into holes which are arranged in the vehicle, in particular the roof of the vehicle, for installing the ventilator on a vehicle. This makes simple installation and fitting of the ventilator on the vehicle possible. Fig. 4 shows an exploded view of a ventilator 1 according to Figs. 1-3, in which the same reference numerals are used. In the illustrated representation, the supply opening 17, the discharge opening 18 and the elongate holes 19 are situated in a separate first layer 26, provided with a flange 27. Underneath this layer 26, there is an optional second layer 28, also provided with holes 29 and a flange 30. A rectangular opening may, for example, be arranged in the roof of the vehicle. By arranging one of the layers 26, 28 in this opening, the flange 27, 30 of the layer 26, 28 rests on the vehicle. A sealing element (not shown), such as a sealing strip, may be fitted between each layer 26, 28, and between the layer 26, 28 and the underside 15, as well as between each layer 26, 28 and the top side of the roof of the vehicle, in order to prevent the ingress of moisture in the vehicle. It is also possible to omit the layers 26, 28 and to provide two essentially round openings in the roof of the vehicle.

It will be clear that the invention is not limited to the exemplary embodiments which are illustrated and described here, but that countless variants are possible within the scope of the attached claims which will be obvious to those skilled in the art. In this case, it is conceivable for different inventive concepts and/or technical measures of the above-described variant embodiments to be fully or partly combined without departing from the inventive idea which is described in the attached claims.

## Claims

1. Ventilator (1) for installation on a vehicle comprising:
- a covering (2) which is attachable to the vehicle, which covering (2) encloses a first air chamber (7) and a second air chamber (8),
- a supply opening (17) which is in contact with the first air chamber (7) for supplying air from the first air chamber (7) to a space of the vehicle (1) to be ventilated,
- a discharge opening (18) which is in contact with the second air chamber (8) for discharging air to the second air chamber (8) from the space to be ventilated,
- an air inlet (3) connected to the first air chamber (7), arranged in a front side of the covering (2) which is to be turned in a direction of travel (6) of the vehicle (1), for supplying outside air to the first air chamber (7), and
- an air outlet (4) connected to the second air chamber (8), arranged in a rear side of the covering (2) which is to be turned away from the direction of travel (6) of the vehicle (1), for discharging air from the second air chamber (8) to the outside air,
in which the covering (2) is provided with at least one air passage (22) which is connected to the second air chamber (8) for passing an air flow from an outer side of the covering (2) into the second air chamber (8) via an inlet opening (23), **characterized in that** the inlet opening (23) of the at least one air passage (22) faces the front side of the covering (2).

2. Ventilator (1) according to Claim 1, wherein the at least one air passage (22) is configured for guiding the air flow which was passed into the second air chamber (8) via the inlet opening (23) to the air outlet (4) through the second air chamber (8).

3. Ventilator (1) according to one of the preceding claims, wherein the ventilator (1) comprises several air passages (22) which are preferably arranged on either side of the covering (2), wherein preferably at least two air passages (22) are placed one behind the other in a direction from the front side to the rear side of the covering (2).

4. Ventilator (1) according to one of the preceding claims, wherein the first air chamber (7) extends under a front part of the covering (2) which is to be turned in the direction of travel (6) and the second air chamber (8) extends under a rear part of the covering (2) which is to be turned away from the direction of travel (6).

5. Ventilator (1) according to one of the preceding claims, wherein the covering (2) narrows in the direction of the rear side, in which case the at least one air passage (22) is arranged in a narrowing part of the covering (2).

6. Ventilator (1) according to one of the preceding claims, wherein the first air chamber (7) and the second air chamber (8) are essentially completely separate from one another.

7. Ventilator (1) according to Claim 6, wherein the first air chamber (7) and the second air chamber (8) are separated from one another by means of a double-wall partition (9), the walls (10, 11) of which enclose a drainage duct (13) and are each provided with at least one hole (14) for discharging water from the first air chamber (7) and the second air chamber (8), respectively, to the drainage duct (13), wherein preferably the walls (10, 11) of the double-wall partition (9) are at least partly curved and a concave side thereof faces the first air chamber (7) and the second air chamber (8), respectively.

8. Ventilator (1) according to one of the preceding claims, wherein the supply opening (17) is essentially completely surrounded by an upright edge (20), wherein the upright edge (20) preferably screens off the supply opening (17) essentially completely on a side facing the air inlet (3) and at least partly exposes it on a side facing away from the air inlet (3).

9. Ventilator (1) according to one of the preceding claims, wherein the discharge opening (18) is essentially completely surrounded by an upright edge (21), wherein preferably the upright edge (21) screens off the discharge opening (18) essentially completely on a side facing the air outlet (4) and at least partly exposes it on a side facing away from the air outlet (4).

10. Ventilator (1) according to one of the preceding claims, wherein the supply opening (17) and the discharge opening (18) are configured to be directly connected to the space to be ventilated.

11. Ventilator (1) according to one of the preceding claims, wherein the supply opening (17) and the discharge opening (18) are arranged in a bottom side (15) of the covering (2) which is to be turned towards the vehicle.

12. Ventilator (1) according to one of the preceding claims, wherein the air inlet (3) and/or the air outlet (4) is provided with an adjustable closing element so as to be able to at least partly close or open the air inlet (3) and/or the air outlet (4).

13. Ventilator (1) according to one of the preceding claims, wherein the covering (2) is made of a plastic, and in particular a fibre-reinforced plastic.

14. Vehicle provided with a ventilator (1) according to one of the preceding claims.

15. Vehicle according to Claim 14, wherein the ventilator (1) is connected to a space to be ventilated, such as a loading space, of the vehicle, via the supply opening (17) and the discharge opening (18), wherein the ventilator (1) is preferably fitted to a roof of the vehicle.

## Patentansprüche

1. Lüfter (1) zur Installation auf einem Fahrzeug, Folgendes umfassend:
- eine Abdeckung (2), die am Fahrzeug befestigt werden kann, wobei die Abdeckung (2) eine erste Luftkammer (7) und eine zweite Luftkammer (8) umschließt,
- eine Zufuhröffnung (17), die mit der ersten Luftkammer (7) verbunden ist, um einem Raum des zu belüftenden Fahrzeugs (1) Luft von der ersten Luftkammer (7) zuzuführen,
- eine Ablassöffnung (18), die mit der zweiten Luftkammer (8) verbunden ist, um Luft aus dem zu belüftenden Raum in die zweite Luftkammer (8) abzulassen,
- einen mit der ersten Luftkammer (7) verbundenen Lufteinlass (3), der in einer Vorderseite der Abdeckung (2), die in Fahrtrichtung (6) des Fahrzeugs (1) gedreht wird, angeordnet ist, um der ersten Luftkammer (7) Umgebungsluft zuzuführen, und
- einen mit der zweiten Luftkammer (8) verbundenen Luftauslass (4), der in einer Rückseite der Abdeckung (2), die von der Fahrtrichtung (6) des Fahrzeugs (1) weggedreht wird, angeordnet ist, um Luft aus der zweiten Luftkammer (8) an die Umgebungsluft abzulassen,
wobei die Abdeckung (2) mit mindestens einem Luftkanal (22) versehen ist, der mit der zweiten Luftkammer (8) verbunden ist, um einen Luftstrom von einer Außenseite der Abdeckung (2) über eine Einlassöffnung (23) in die zweite Luftkammer (8) zu leiten, **dadurch gekennzeichnet, dass** die Einlassöffnung (23) des mindestens einen Luftkanals (22) der Vorderseite der Abdeckung (2) zu gewandt ist.

2. Lüfter (1) nach Anspruch 1, wobei der mindestens eine Luftkanal (22) dazu ausgelegt ist, den Luftstrom, der über die zweite Einlassöffnung (23) in die zweite Luftkammer (8) geleitet wurde, durch die zweite Luftkammer (8) zum Luftauslass (4) zu leiten.

3. Lüfter (1) nach einem der vorstehenden Ansprüche, wobei der Lüfter (1) mehrere Luftkanäle (22) umfasst, die vorzugsweise auf beiden Seiten der Abdeckung (2) angeordnet sind, wobei vorzugsweise mindestens zwei Luftkanäle (22) in einer Richtung von der Vorderseite zur Rückseite der Abdeckung (2) hintereinander angeordnet sind.

4. Lüfter (1) nach einem der vorstehenden Ansprüche, wobei sich die erste Luftkammer (7) unter einem Vorderteil der Abdeckung (2) erstreckt, der in Fahrtrichtung (6) gedreht wird, und wobei sich die zweite Luftkammer (8) unter einem Hinterteil der Abdeckung (2) erstreckt, der von der Fahrtrichtung (6) weggedreht wird.

5. Lüfter (1) nach einem der vorstehenden Ansprüche, wobei sich die Abdeckung (2) nach hinten verjüngt, wobei der mindestens eine Luftkanal (22) in einem sich verengenden Teil der Abdeckung (2) angeordnet ist.

6. Lüfter (1) nach einem der vorstehenden Ansprüche, wobei die erste Luftkammer (7) und die zweite Luftkammer (8) im Wesentlichen vollständig voneinander getrennt sind.

7. Lüfter (1) nach Anspruch 6, wobei die erste Luftkammer (7) und die zweite Luftkammer (8) über eine Doppeltrennwand (9) voneinander getrennt sind, wobei deren Wände (10, 11) einen Abflusskanal (13) umschließen und jeweils mit mindestens einer Bohrung (14) zum Ablassen von Wasser aus der ersten Luftkammer (7) bzw. der zweiten Luftkammer (8) zum Abflusskanal (13) versehen sind, wobei die Wände (10, 11) der Doppeltrennwand (9) vorzugsweise zumindest teilweise gekrümmt sind und eine ihrer konkaven Seiten der ersten Luftkammer (7) bzw. der zweiten Luftkammer (8) zugewandt ist.

8. Lüfter (1) nach einem der vorstehenden Ansprüche, wobei die Zufuhröffnung (17) im Wesentlichen vollständig von einer aufrechten Kante (20) umgeben ist, wobei die aufrechte Kante (20) vorzugsweise die Zufuhröffnung (17) im Wesentlichen vollständig auf einer dem Lufteinlass (3) zugewandten Seite abschirmt und auf einer vom Lufteinlass (3) abgewandten Seite zumindest teilweise freilegt.

9. Lüfter (1) nach einem der vorstehenden Ansprüche, wobei die Ablassöffnung (18) im Wesentlichen vollständig von einer aufrechten Kante (21) umgeben ist, wobei die aufrechte Kante (21) vorzugsweise die Ablassöffnung (18) im Wesentlichen vollständig auf einer dem Luftauslass (4) zugewandten Seite abschirmt und auf einer vom Luftauslass (4) abgewandten Seite zumindest teilweise freilegt.

10. Lüfter (1) nach einem der vorstehenden Ansprüche, wobei die Zufuhröffnung (17) und die Ablassöffnung (18) dazu ausgelegt sind, direkt mit dem zu belüftenden Raum verbunden zu sein.

11. Lüfter (1) nach einem der vorstehenden Ansprüche, wobei die Zufuhröffnung (17) und die Ablassöffnung (18) in einer Unterseite (15) der Abdeckung (2), die zum Fahrzeug gedreht wird, ausgerichtet sind.

12. Lüfter (1) nach einem der vorstehenden Ansprüche, wobei der Lufteinlass (3) und/oder der Luftauslass (4) mit einem einstellbaren Verschlusselement versehen ist, um den Lufteinlass (3) und/oder den Luftauslass (4) zumindest teilweise schließen oder öffnen zu können.

13. Lüfter (1) nach einem der vorstehenden Ansprüche, wobei die Abdeckung (2) aus Kunststoff besteht, insbesondere aus einem faserverstärkten Kunststoff.

14. Fahrzeug, das mit einem Lüfter (1) nach einem der vorstehenden Ansprüche versehen ist.

15. Fahrzeug nach Anspruch 14, wobei der Lüfter (1) über die Zufuhröffnung (17) und die Ablassöffnung (18) mit einem zu belüftenden Raum, zum Beispiel einem Laderaum, des Fahrzeugs verbunden ist, wobei der Lüfter (1) vorzugsweise auf dem Dach des Fahrzeugs angebracht ist.

## Revendications

1. Ventilateur (1) pour installation sur un véhicule, comprenant :
- une couverture (2) qui peut être attachée au véhicule, laquelle couverture (2) entoure une première chambre à air (7) et une seconde chambre à air (8),
- une ouverture d'alimentation (17) qui est en contact avec la première chambre à air (7) pour fournir de l'air provenant de la première chambre à air (7) à un espace du véhicule (1) destiné à être ventilé,
- une ouverture d'évacuation (18) qui est en contact avec la seconde chambre à air (8) pour évacuer de l'air vers la seconde chambre à air (8), à partir de l'espace destiné à être ventilé,
- une entrée d'air (3) raccordée à la première chambre à air (7), agencée dans un côté avant de la couverture (2) qui est destiné à être tourné dans une direction de déplacement (6) du véhicule (1), pour fournir de l'air extérieur à la première chambre à air (7), et
- une sortie d'air (4) raccordée à la seconde chambre à air (8), agencée dans un côté arrière de la couverture (2) qui est destiné à être tourné à l'opposé de la direction de déplacement (6) du véhicule (1), pour évacuer de l'air provenant de la seconde chambre à air (8) vers l'air extérieur,
dans lequel la couverture (2) est pourvue d'au moins un passage d'air (22) qui est raccordé à la seconde chambre à air (8) pour faire passer un écoulement d'air depuis un côté extérieur de la couverture (2) dans la seconde chambre à air (8) par l'intermédiaire d'une ouverture d'entrée (23), **caractérisé en ce que** l'ouverture d'entrée (23) de l'au moins un passage d'air (22) fait face au côté avant de la couverture (2).

2. Ventilateur (1) selon la revendication 1, dans lequel l'au moins un passage d'air (22) est configuré pour guider l'écoulement d'air qui est passé dans la seconde chambre à air (8) par l'intermédiaire de l'ouverture d'entrée (23) vers la sortie d'air (4) à travers la seconde chambre à air (8).

3. Ventilateur (1) selon une des revendications précédentes, dans lequel le ventilateur (1) comprend plusieurs des passages d'air (22) qui sont de préférence agencés de chaque côté de la couverture (2), dans lequel de préférence au moins deux passages d'air (22) sont placés l'un derrière l'autre dans une direction depuis le côté avant jusqu'au côté arrière de la couverture (2).

4. Ventilateur (1) selon une des revendications précédentes, dans lequel la première chambre à air (7) s'étend sous une partie avant de la couverture (2) qui est destinée à être tournée dans la direction de déplacement (6) et la seconde chambre à air (8) s'étend sous une partie arrière de la couverture (2) qui est destinée à être tournée à l'opposé de la direction de déplacement (6).

5. Ventilateur (1) selon une des revendications précédentes, dans lequel la couverture (2) se rétrécit dans la direction du côté arrière, auquel cas l'au moins un passage d'air (22) est agencé dans une partie se rétrécissant de la couverture (2).

6. Ventilateur (1) selon une des revendications précédentes, dans lequel la première chambre à air (7) et la seconde chambre à air (8) sont essentiellement complètement séparées l'une de l'autre.

7. Ventilateur (1) selon la revendication 6, dans lequel la première chambre à air (7) et la seconde chambre à air (8) sont séparées l'une de l'autre au moyen d'une cloison à deux parois (9), dont les parois (10, 11) entourent une conduite de drainage (13) et sont chacune pourvues d'au moins un trou (14) pour évacuer de l'eau à partir de la première chambre à air (7) et de la seconde chambre à air (8), respectivement, vers la conduite de drainage (13), dans lequel de préférence les parois (10, 11) de la cloison à deux parois (9) sont au moins partiellement incurvées et un côté concave de celles-ci fait face à la première chambre à air (7) et la seconde chambre à air (8), respectivement.

8. Ventilateur (1) selon une des revendications précédentes, dans lequel l'ouverture d'alimentation (17) est essentiellement complètement entourée par un bord vertical (20), dans lequel le bord vertical (20) de préférence protège et sépare l'ouverture d'alimentation (17) essentiellement complètement sur un côté faisant face à l'entrée d'air (3) et l'expose au moins partiellement sur un côté faisant face à l'opposé de l'entrée d'air (3).

9. Ventilateur (1) selon une des revendications précédentes, dans lequel l'ouverture d'évacuation (18) est essentiellement complètement entouré par un bord vertical (21), dans lequel de préférence le bord vertical (21) protège et sépare l'ouverture d'évacuation (18) essentiellement complètement sur un côté faisant face à la sortie d'air (4) et l'expose au moins partiellement sur un côté faisant face à l'opposé de la sortie d'air (4).

10. Ventilateur (1) selon une des revendications précédentes, dans lequel l'ouverture d'alimentation (17) et l'ouverture d'évacuation (18) sont configurées pour être directement raccordées à l'espace destiné à être ventilé.

11. Ventilateur (1) selon une des revendications précédentes, dans lequel l'ouverture d'alimentation (17) et l'ouverture d'évacuation (18) sont agencées dans un côté inférieur (15) de la couverture (2) qui est destiné à être tourné vers le véhicule.

12. Ventilateur (1) selon une des revendications précédentes, dans lequel l'entrée d'air (3) et/ou la sortie d'air (4) est pourvue d'un élément de fermeture réglable afin d'être capable de fermer ou d'ouvrir au moins partiellement l'entrée d'air (3) et/ou la sortie d'air (4).

13. Ventilateur (1) selon une des revendications précédentes, dans lequel la couverture (2) est faite d'un plastique, et en particulier d'un plastique renforcé par des fibres.

14. Véhicule pourvu d'un ventilateur (1) selon une des revendications précédentes.

15. Véhicule selon la revendication 14, dans lequel le ventilateur (1) est raccordé à un espace destiné à être ventilé, tel qu'un espace de chargement, du véhicule, par l'intermédiaire de l'ouverture d'alimentation (17) et de l'ouverture d'évacuation (18), dans lequel le ventilateur (1) est de préférence ajusté sur un toit du véhicule.
